(19) **Europäisches Patentamt / European Patent Office / Office européen des brevets**

(11) **EP 2 719 044 B1**

(12) **FASCICULE DE BREVET EUROPEEN**

(45) Date de publication et mention de la délivrance du brevet:
**25.11.2015 Bulletin 2015/48**

(21) Numéro de dépôt: **12729069.0**

(22) Date de dépôt: **06.06.2012**

(51) Int Cl.:
*H02J 3/00* *(2006.01)*   *H02J 13/00* *(2006.01)*
*H02J 4/00* *(2006.01)*

(86) Numéro de dépôt international:
**PCT/EP2012/060742**

(87) Numéro de publication internationale:
**WO 2012/168323 (13.12.2012 Gazette 2012/50)**

(54) **ENSEMBLE DE PILOTAGE D'UN SYSTÈME DE PRODUCTION/CONSOMMATION ÉLECTRIQUE**

STEUERUNG EINES SYSTEMS ZUR ERZEUGUNG ODER DES VERBRAUCHS ELEKTRISCHER ENERGIE

CONTROL OF A SYSTEM PRODUCING OR CONSUMING ELECTRICAL ENERGY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.06.2011 FR 1155130**

(43) Date de publication de la demande:
**16.04.2014 Bulletin 2014/16**

(73) Titulaire: **Electricité de France**
**75008 Paris (FR)**

(72) Inventeurs:
• **DELON, Pierre-Etienne**
**92420 Vaucresson (FR)**
• **NORMAND, Olivier**
**78530 Buc (FR)**

(74) Mandataire: **Regimbeau**
**20, rue de Chazelles**
**75847 Paris Cedex 17 (FR)**

(56) Documents cités:
**FR-A1- 2 904 486    JP-A- 2010 193 562**

**Description**

La présente invention concerne le domaine de la gestion des systèmes électriques, et en particulier des réseaux de distribution électrique.

Aujourd'hui la gestion de systèmes électriques consiste le plus souvent à moduler une production centralisée, de manière à équilibrer à chaque instant consommation et production au niveau d'un réseau, typiquement au niveau national d'un Etat, sur la base de la consommation effective mesurée en temps réel.

L'idée de moduler la charge d'un réseau de distribution électrique, et non pas la production centralisée, existe également depuis longtemps. Ainsi en France on peut citer les signaux tarifaires dits Heures Pleines/Heures Creuses qui asservissent l'alimentation des ballons électriques d'eau chaude pendant certaines périodes de la journée. Des contrats dits EJP (Effacement des Jours de Pointe) ont également été mis en oeuvre pour inciter des clients à s'effacer certains jours de l'année. Puis, avec l'arrivée d'Internet et la démocratisation des accès ADSL (« Asymmetric Digital Subscriber Line » ou « Liaison Numérique à Débit Asymétrique sur Ligne d'Abonné »), des solutions ont été développées pour envoyer des signaux d'effacement depuis un serveur centralisé. Ces solutions visent un pilotage national d'un portefeuille homogène de consommateurs. Par exemple on propose à des clients disposant de convecteurs électriques, d'installer un boîtier qui va d'un côté communiquer avec un serveur centralisé et de l'autre, à la demande de ce serveur, couper ponctuellement l'alimentation d'un ou de plusieurs convecteurs. Le potentiel d'effacement est évalué de manière statistique en analysant la déformation de la courbe de charge des clients effacés.

Cette approche a plusieurs inconvénients :

- La détermination du potentiel d'effacement des consommateurs se fait a posteriori, c'est-à-dire après un temps d'apprentissage de la courbe de charge agrégée.
- Pour que l'effacement soit fiable il faut un nombre important de clients effacés, ce qui empêche d'utiliser ce système à une échelle locale, donc sur un réseau de distribution basse tension.
- Le portefeuille de clients effacés doit être globalement homogène. Il s'agit typiquement de consommateurs raccordés au réseau électrique, chez qui on installe un même appareil ayant une seule fonction, comme par exemple des convecteurs électriques dont on pilote l'effacement.

On trouvera d'autres exemples de solutions proposées selon l'état de la technique dans les documents FR 2 904 486, FR 2 937 473 et US 2010/0094479.

Le document FR 2 904 486 décrit un procédé de gestion et de modulation de la consommation électrique d'un ensemble de consommateurs reliés à un réseau de distribution électrique, qui propose une mesure en temps réel de la consommation électrique d'une pluralité d'ensembles ciblés d'équipements électriques en fonctionnement, la transmission des informations ainsi recueillies par des boîtiers de mesure situés au niveau de chaque équipement vers un serveur central et l'envoi par le serveur central vers certains des boîtiers, d'ordres d'effacements si une consigne globale externe l'exige.

Le document FR 2 937 473 décrit un procédé de régulation de la puissance consommée sur un réseau électrique, selon lequel chaque consommateur éligible communique à une entité centrale les paramètres suivants :

- la durée maximale acceptable de réduction de consommation,
- le délai minimum acceptable de déclenchement d'une réduction,
- la valeur maximale acceptable de la réduction de puissance électrique consommée.

Le document US 2010/0094479 décrit un autre procédé de régulation de la puissance consommée sur un réseau électrique. Dans un mode de réalisation, le procédé décrit dans ce document consiste à mesurer une tension ou puissance, à partir d'une prise électrique de l'abonné, et à fournir des données à un serveur central via un accès Internet depuis l'ordinateur du client.

La présente invention a maintenant pour objectif de proposer de nouveaux moyens permettant de palier aux inconvénients de la technique antérieure et d'améliorer les performances des systèmes connus jusqu'ici.

L'objectif précité est atteint selon la présente invention grâce à un ensemble de pilotage d'un système de production/consommation électrique comprenant des sources de production électrique et des unités de consommation raccordées par l'intermédiaire d'un réseau de distribution, caractérisé par le fait qu'il comprend :

- une centrale de pilotage adaptée pour transmettre à des unités de consommation pilotables et à des sources de production électrique pilotables, des consignes de modulation correspondant à des consignes d'effacement, respectivement de production, basées sur des informations d'alerte reçues d'un opérateur externe, sur des informations représentatives du potentiel d'effacement respectif d'unités de consommation pilotables et sur des informations représentatives du potentiel de production ou de réduction de production, voire d'effacement respectif de sources de production,

- au niveau de chaque unité de consommation pilotable, un module adapté pour transmettre à la centrale de pilotage, des données mises à jour en temps réel représentatives du potentiel d'effacement respectif de l'unité associée, et
- au niveau de certaines au moins des sources de production pilotables, un module adapté pour transmettre à la centrale de pilotage, des données mises à jour en temps réel, représentatives du potentiel de production ou de réduction de production, voire d'effacement respectif de la source associée.

Dans le cadre de la présente invention, les systèmes de production et/ou de consommation électrique précités, doivent être considérés comme intégrant le cas échéant des moyens de stockage. En d'autres termes, la présente invention englobe les systèmes électriques dans lesquels certains au moins des systèmes de production et/ou de consommation sont formés de tels moyens de stockage.

Selon d'autres caractéristiques avantageuses de l'invention :

- La centrale de pilotage est adaptée pour fournir des consignes de modulation aux sources de production pilotables et aux unités de consommation pilotables, à différents horizons de temps, de préférence à deux horizons de temps, par exemple un horizon à 24h au pas de 30mn pour les demandes de modulation j-1 et un horizon à 4h au pas de 10mn pour les demandes de modulation j.
- Chaque module est adapté pour fournir des informations sur son potentiel de modulation, soit un potentiel d'effacement, respectivement de production, à un horizon de temps supérieur à celui de la centrale de pilotage pour les consignes.
- Le potentiel de modulation est décrit par i) des données mises à jour en temps réel et ii) des contraintes de fonctionnement consignées dans un contrat d'effacement ou de production.
- Les données mises à jour en temps réel comprennent des données choisies parmi la puissance maximale modulable, c'est-à-dire effaçable ou pouvant être produite, sur une période prédéterminée, par exemple sur les 40 prochaines heures au pas de 10mn, le coût marginal de modulation, c'est-à-dire d'effacement ou de modulation de production sur une période prédéterminée, l'état courant (disponible ou en défaut), et facultativement des informations liées à l'utilisation d'un stock, par exemple un profil d'utilisation par défaut du stock, un profil de variation maximale du stock, un niveau de stock initial et un niveau de stock final minimal.
- La centrale de pilotage reçoit deux types de plage d'alerte de l'opérateur externe correspondant à des probabilités différentes de sollicitation d'effacement ou de production.

La présente invention concerne également un procédé de pilotage d'un système de production/consommation électrique comprenant des sources de production électrique et des unités de consommation raccordées par l'intermédiaire d'un réseau de distribution.

D'autres caractéristiques, buts et avantages de la présente invention apparaîtront à la lecture de la description détaillée qui va suivre et en regard des dessins annexés, donnés à titre d'exemple non limitatif et sur lesquels :

- la figure 1 représente une vue schématique d'un ensemble de pilotage conforme à la présente invention,
- la figure 2 représente schématiquement l'organigramme général du procédé de pilotage conforme à la présente invention,
- la figure 3 représente schématiquement les étapes d'un procédé de détermination du potentiel de modulation, effacement et/ou production, agrégé conforme à la présente invention, et
- la figure 4 représente schématiquement les étapes d'un procédé de détermination de la répartition de consignes de modulation, effacement et/ou production, conforme à la présente invention.

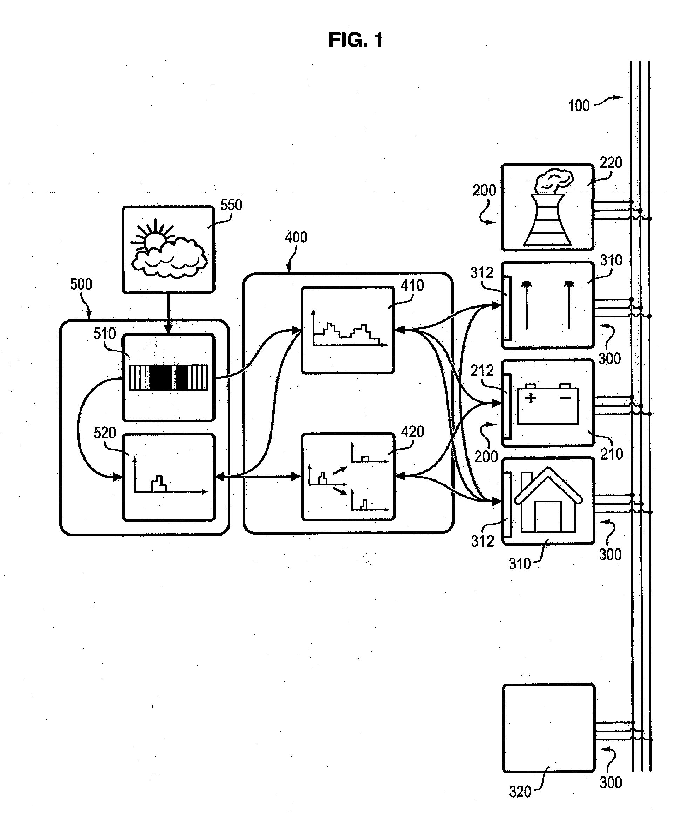

L'invention concerne un ensemble de pilotage d'un système de production/consommation électrique, ainsi qu'un procédé de pilotage d'un tel système. Ce système comprend un réseau de distribution électrique basse tension, référencé schématiquement 100 sur la figure 1, des sources de production électrique 200 et des unités de consommation 300 raccordées au réseau 100.

Parmi les sources de production électrique 200 et les unités de consommation 300 raccordées au réseau 100 il est prévu au moins certaines sources de production 210 et certaines unités de consommation 310 qui sont adaptées pour être pilotables à partir d'une centrale de pilotage 400 selon un procédé conforme à la présente invention.

A cette fin il est prévu, selon l'invention, au niveau de certaines au moins des sources de production pilotables 210, un module 212 adapté pour transmettre à la centrale de pilotage 400, des données mises à jour en temps réel, représentatives du potentiel de modulation, c'est-à-dire du potentiel de production ou de réduction de production, voire d'effacement respectif de la source associée 210.

De même selon l'invention, il est prévu au niveau de chaque unité de consommation pilotable 310, un module 312 adapté pour transmettre à la centrale de pilotage 400, des données mises à jour en temps réel représentatives du potentiel de modulation, c'est-à-dire du potentiel d'effacement respectif, de l'unité associée.

D'autres sources de production 220 et unités de consommation 320 peuvent être raccordées au réseau 100 sans être pilotables à partir de la centrale de pilotage 400. De telles sources de production 220 peuvent être pilotées par exemple sur la base d'autres processus connus. De même certaines au moins des unités de consommation 320 non pilotables à partir de la centrale de pilotage 400 peuvent être pilotées sur la base de processus connus, par exemple des contrats type EJP.

La centrale de pilotage 400 est adaptée pour transmettre aux unités de consommation pilotables 310 et aux sources de production électrique pilotables 210, des consignes de modulation qui correspondent à des consignes d'effacement, respectivement de production, basées sur des informations d'alerte reçues d'au moins un opérateur externe 500 (lequel doit être considéré comme un acteur du système électrique), sur des informations représentatives du potentiel d'effacement respectif des unités de consommation pilotables 310 et sur des informations représentatives du potentiel de production ou de réduction de production, voire d'effacement respectif des sources de production pilotables 210.

Les sources de production pilotables 210 sont ainsi des systèmes connectés au réseau électrique 100, qui produisent de l'électricité, qui possèdent des modules 212 compatibles avec la centrale de pilotage 400 et qui sont pilotables. On entend par « compatibles avec la centrale de pilotage 400 » et « pilotables », que les modules 212 sont adaptés pour transmettre à la centrale de pilotage 400 un certain nombre d'informations sur leur potentiel d'effacement et/ou de production et recevoir de la centrale de pilotage des informations permettant de moduler leur puissance d'une quantité exprimée (par exemple en W) sous forme de plan de production et ce de préférence à différents horizons de temps.

Les unités de consommation pilotables 310 sont quant à elles dès systèmes connectés au réseau électrique 100, qui consomment de l'électricité, qui possèdent des modules 312 compatibles avec la centrale de pilotage 400 et qui sont pilotables. On entend par « compatibles avec la centrale de pilotage 400 » et « pilotables » que les modules 312 sont adaptés pour transmettre à la centrale de pilotage 400 un certain nombre d'informations sur leur potentiel d'effacement et recevoir de la centrale de pilotage des informations permettant de moduler leur puissance d'une quantité exprimée (par exemple en W) sous forme de plan de réduction de consommation et ce de préférence à différents horizons de temps.

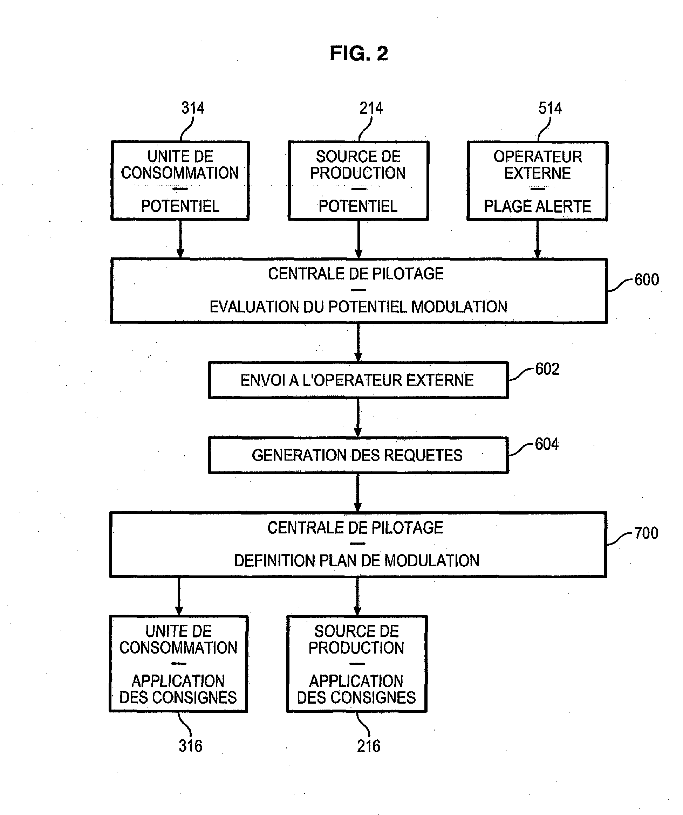

On a représenté schématiquement sur la figure 2 annexée, le procédé de pilotage conforme à la présente invention comprenant les étapes principales suivantes :

- Des étapes 314, 214 et 514 au cours desquelles, les unités de consommation 310, les sources de production 210 et l'opérateur externe 500 génèrent les informations représentatives de leur potentiel de modulation et des plages d'alertes,
- Une étape 600 au cours de laquelle la centrale de pilotage 400 procède à l'évaluation du potentiel de modulation pour l'ensemble des sources de production 210 et unités de consommation 310,
- Une étape 602 au cours de laquelle la centrale de pilotage 400 adresse le résultat de cette évaluation à l'opérateur externe 500,
- Une étape 604 au cours de laquelle l'opérateur externe génère des requêtes générales de modulation et adresse ces requêtes à la centrale de pilotage 400,
- Une étape 700 au cours de laquelle la centrale de pilotage 400 procède à l'évaluation des plans de modulation individuels et
- Des étapes 316 et 216 au cours desquelles les unités de consommation 310 et respectivement les sources de production 210 appliquent les consignes de modulation reçues de la centrale de pilotage 400.

Les différents horizons de temps précités des consignes de modulation issues de la centrale de pilotage 400 à l'étape 700 et mis en oeuvre par les unités 310 et sources 210 lors des étapes 316 et 216, comprennent par exemple au moins un premier horizon de temps à l'échelle de la journée selon un premier pas en minutes, pour les demandes de modulation envoyées la veille de leur application, et un deuxième horizon de temps à l'échelle de quelques heures selon un second pas en minutes, de préférence inférieur au premier pas, pour les demandes de modulation envoyées le jour de leur application.

Plus précisément, selon un mode de réalisation préférentiel de la présente invention, les différents horizons de temps précités, de définition des plans de production ou de réduction de consommation, comprennent deux horizons de temps définis comme suit :

- 24h au pas 30 minutes pour les demandes de modulation de type J-1, c'est à dire envoyées la veille de leur application.
- 4h au pas 10 minutes pour les demandes de modulation de type J, c'est à dire envoyées le jour de leur application.

Les demandes de modulation de puissance envoyées par la centrale de pilotage 400 à une source de production pilotable 210 ou à une unité de consommation pilotable 310, à l'issue de l'étape 700, sont appelées consignes de modulation. On distingue donc les consignes de modulation J-1 et les consignes de modulation J. Si une source de production pilotable 210 ou une unité de consommation pilotable 310 reçoit deux consignes qui se chevauchent, elle applique de préférence la consigne résultant de la somme des deux. En ce sens, les consignes sont incrémentales.

Cependant en variante l'on peut prévoir que plusieurs opérateurs externes interviennent dans le cadre de la présente invention. Dans ce cas on peut prévoir non pas d'appliquer une consigne incrémentale résultant de la somme des consignes reçues, mais d'appliquer une consigne résultant d'un arbitrage pré-défini selon la nature de l'opérateur externe envoyant la plage d'alerte.

Lors des étapes 214 et 314 chaque source de production pilotable 210 ou unité de consommation pilotable 310 fournit en temps réel, par exemple toutes les heures, des informations sur son potentiel de modulation, c'est-à-dire son potentiel d'effacement, respectivement de production, pour une période de temps d'estimation à venir. De préférence cette période de temps d'estimation correspond à un horizon de temps supérieur à celui retenu par la centrale de pilotage 400 pour ses consignes. A titre d'exemple préférentiel mais non limitatif, chaque source de production pilotable 210 ou unité de consommation pilotable 310 fournit ainsi en temps réel lors des étapes 214 et 314, des informations sur son potentiel d'effacement, respectivement de production, pour les 40 prochaines heures au pas 10 minutes. Le pas temporel, par exemple égal à 10 minutes, des informations fournies par les sources 210 et les unités 310 est de préférence égal au pas minimal des consignes générées par la centrale de pilotage 400 lors de l'étape 700.

Le potentiel de modulation, c'est-à-dire le potentiel d'effacement, respectivement de production, transmis par les sources 210 et les unités 310 à la centrale de pilotage 400, lors des étapes 214 et 314, est décrit de préférence par des données mises à jour en temps réel et par des contraintes de fonctionnement.

Les données mises à jour en temps réel peuvent comprendre :

- La puissance maximale modulable, c'est-à-dire effaçable ou pouvant être produite, au pas 10 minutes sur les 40 prochaines heures.
- Le coût marginal de modulation, c'est-à-dire d'effacement ou de surproduction, au pas 10 minutes sur les 40 prochaines heures, c'est-à-dire le coût total résultant de l'impact de la modulation sur l'ensemble des équipements présents dans une unité 310.
- Son état courant, c'est-à-dire disponible ou en défaut.

Le cas échéant les données mises à jour en temps réel peuvent également comprendre facultativement des informations liées à l'utilisation d'un stock permettant le déplacement de la consommation ou de la production d'une source 210 ou d'une unité 310, dans le temps, par exemple :

- Un profil d'utilisation par défaut de son stock au pas 10 minutes pour les 40 prochaines heures.
- Un profil de variation maximale de son stock au pas 10 minutes pour les 40 prochaines heures, c'est-à-dire notamment la capacité à reconstituer son stock avant ou après une demande de modulation de sa puissance.

- Un niveau de stock initial.

- Un niveau de stock final minimal.

Les contraintes de fonctionnement comprennent de préférence les contraintes technique des sources 210 et des unités 310 et les contraintes de confort de l'utilisateur de chaque unité 310 ainsi que des clauses financières décrites formellement, c'est-à-dire de préférence mathématiquement, dans un contrat d'effacement, voire un contrat de production.

La centrale de pilotage 400 reçoit lors de l'étape 514, du module 510 d'un opérateur externe 500, des plages d'alertes, orange et rouge, par exemple au pas 30 minutes, indiquant les périodes sur lesquelles elle est susceptible de recevoir une demande de modulation, assimilable à une demande de baisse de la charge. En réalité dans le cadre de la présente invention, une telle demande de baisse de la charge peut comprendre soit à une demande d'effacement de la consommation des unités 310, soit à une demande de surproduction de ses sources 210. Le module 510 de l'opérateur externe 500 peut prendre en compte par exemple des paramètres provenant d'un module 550 de prévisions météorologiques.

De préférence le pas (30 minutes) des plages d'alerte est égal au pas de l'horizon le plus long des consignes.

Une alerte orange signale une période avec une probabilité modérée d'être sollicité tandis qu'une alerte rouge correspond à une probabilité forte d'être sollicité. Les alertes sont envoyées à la centrale de pilotage 400 par l'opérateur externe 500, lors de l'étape 514, la veille de leur application, de préférence avant 16h.

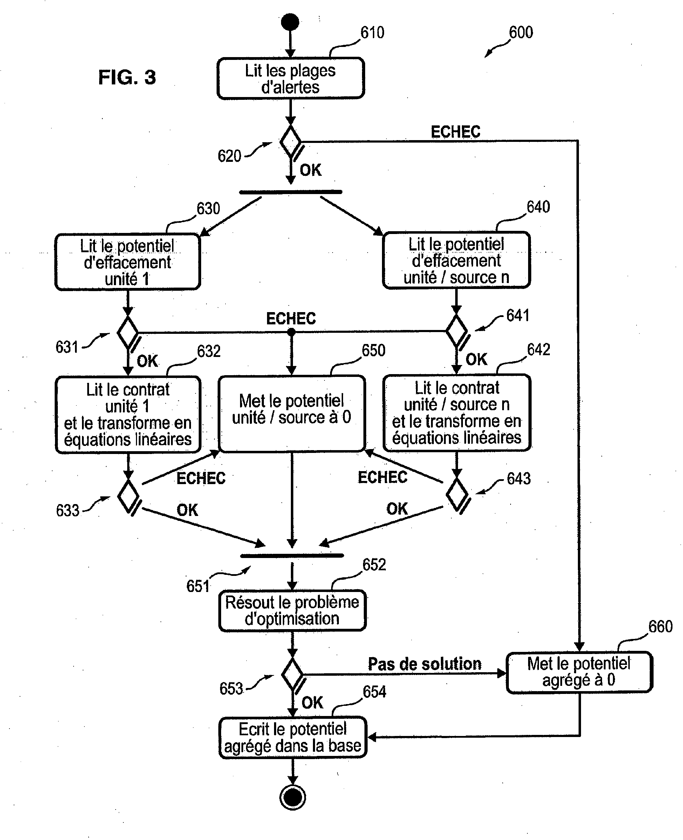

On décrira plus en détail par la suite, en regard de la figure 3, un exemple d'évaluation de potentiel agrégé de modulation opérée par la centrale de pilotage lors de l'étape 600 et envoyée à l'opérateur externe lors de l'étape 602.

Une demande de modulation en conséquence correspondant à une demande de baisse de charge émise par un module 520 de l'opérateur externe 500 à destination de la centrale de pilotage 400, lors de l'étape 604, est appelée requête de modulation. Comme pour les consignes de modulation on distingue les requêtes de modulation J-1 et les requêtes de modulation J.

La centrale de pilotage 400 calcule toutes les heures, lors de l'étape 600, le potentiel de modulation, c'est-à-dire le potentiel de baisse de la charge de l'ensemble des unités de consommation 310 et le potentiel de production des unités de production 210. Pour ce faire la centrale de pilotage 400 réalise une maximisation des potentiels individuels prioritairement sur les périodes d'alertes rouges, puis sur les périodes d'alertes oranges, en tenant compte des contraintes décrites dans les contrats d'effacement ou de production. La centrale de pilotage 400 opère cette maximisation des potentiels individuels, apparentée à la résolution d'un problème de programmation linéaire en nombres entiers, à l'aide de moyens de calcul classiques. La centrale de pilotage 400 calcule également le coût marginal de modulation, effacement ou production, agrégé des sources 210 et unités 310. Ce potentiel (quantité et coût marginal) est appelé potentiel de modulation agrégé. La centrale de pilotage 400 communique le potentiel de modulation, effacement ou production, à l'opérateur externe 500 toutes les heures lors de l'étape 602.

L'opérateur externe 500 envoie une requête de modulation, effacement ou production, à la centrale de pilotage 400 lors de l'étape 604, en fonction de ses besoins propres. La requête est répartie par la centrale de pilotage 400, lors de l'étape 700, en consignes de modulation, effacement ou production, sur l'ensemble des sources 210 et unités 310 disponibles de manière à minimiser le coût de modulation, effacement ou production, tout en respectant les contraintes décrites dans les contrats d'effacement ou de production. Là encore la centrale de pilotage 400 opère cette minimisation des coûts de modulation individuels, apparentée à la résolution d'un problème de programmation linéaire en nombres entiers, à l'aide de moyens de calcul classiques.

Une requête émise par l'opérateur externe 500 lors de l'étape 604 est un ensemble d'ordres de modulation, généralement d'effacement, à appliquer sur des plages horaires données. Par exemple, l'opérateur externe 500 peut demander un effacement de 5 MW de 08h00 à 08h30 et de 3 MW de 08h30 à 09h00.

Une requête émise par l'opérateur externe 500 est définie par :

- Une durée du pas de temps (par exemple 30 minutes).
- Une durée de la requête exprimée en nombre de pas de temps.
- Une date de début de la requête.
- Une liste de valeurs positives ou nulles (la liste a une taille inférieure ou égale au nombre de pas de temps).

Si à un instant t la requête n'a pas de valeur, alors la requête est libre. Les requêtes libres correspondent aux plages d'alerte blanches.

De préférence le nombre, les horizons de temps et les pas des requêtes de modulation générées par l'opérateur externe 500 sont identiques à ceux des consignes de modulation issues de la centrale de pilotage 400.

Il existe ainsi de préférence deux types de requêtes :

- Les requêtes J-1 qui s'appliquent le lendemain, commencent à 00h00, ont un pas de temps de 30 minutes et durent 24h (soit 48 pas de temps).
- Les requêtes J qui s'appliquent le jour même, ont un pas de temps de 10 minutes et durent 4h maximum (soit 24 pas de temps).

Le potentiel d'effacement est calculé par un module dédié de la centrale de pilotage 400, lors de l'étape 600 en maximisant les potentiels individuels prioritairement sur les plages d'alerte rouges puis sur les plages d'alerte oranges. Pour les unités de consommation 310, voire les unités de production 210, qui ont un stock, on utilise les périodes d'alerte blanches comme plages où la surconsommation est autorisée afin de reconstituer le stock avant ou après une plage d'effacement. Cela revient à dire que pour ces unités 310 la consigne d'effacement est libre sur les périodes d'alerte blanches.

La fonction objectif du problème d'optimisation est la suivante :

$$\max \sum_{t \in T} \sum_{p \in P} f(a_t).c_t(p)$$

où $f : \left\{ \begin{matrix} N \mapsto R^+ \\ a \mapsto f(a) \end{matrix} \right.$ est une fonction croissante qui traduit la valorisation de la modulation, effacement ou production, en fonction de la période d'alerte a (0=alerte blanche, 1=alerte orange et 2=alerte rouge) et $c_t(p)$ est la consigne de modulation, effacement ou production, d'une unité 310 ou source 210 p à l'instant t.

Un module de la centrale de pilotage 400 dédié à la détermination de la répartition de la modulation, qui opère lors de l'étape 600, est basé sur une fonction similaire.

Le contrat d'effacement, voire de production, peut faire l'objet de différentes modalités.

Il est de préférence divisé en deux parties :

Une première partie de ce contrat décrit le coût de modulation, c'est à dire le coût d'effacement ou de production, d'une unité 310 ou d'une source 210 $p$ à l'instant t, noté $\pi_t(p)$. Ce coût est composé d'un coût d'appel $\pi_t^m(p)$ d'un coût minimal de modulation (d'effacement) $\pi_t^{min}(p)$ et d'un coût marginal de modulation (d'effacement) $\pi_t^{mar}(p)$ :

$$\pi t(p) = \pi_t^m(p).m_t(p) + \pi_t^{min}(p). Z_t(p) + \pi_t^{mar}(p).c_t(p)$$

où $m_t(p) \in \{0,1\}$ indique le passage d'une consigne nulle à une consigne non nulle,
$z_t(p) \in \{0,1\}$ indique si la consigne est non nulle et $c_t(p)$ représente la consigne d'une unité 310 ou d'une source 210 p à l'instant t.

La deuxième partie d'un contrat traduit une liste de contraintes techniques ou de confort, telles que par exemple :

- Gradient maximum entre deux instants consécutifs.
- Temps minimal de modulation (d'effacement) strictement positif.
- Temps maximal de modulation (d'effacement) strictement positif.
- Temps minimal entre deux modulations (effacements) strictement positifs.
- Nombre maximal de sollicitations.
- Quantité maximale de modulation (d'effacement).
- Gestion d'un stock : Cette contrainte s'applique aux variables $c_t(p)$ (consigne), $s_t(p)$ (niveau de stock) et $d_t(p)$ (dégradation de confort). Soient $(G_t^{S,def}(p))$ (variation par défaut du stock), $-G_t^{S,max}(p))$ (variation maximale possible du stock) et $(D_t^{max}(p))$ (dégradation maximale du confort exprimée en énergie) trois vecteurs réels :

$$\forall t_i \in \tau \setminus \{t_0\}, \begin{cases} t_i \in \overline{T} \Rightarrow S_{ti}(p) - S_{ti-1}(p) \leq G_{ti-1}^{S,max}(p) \\ t_i \notin \overline{T} \Rightarrow S_{ti}(p) - S_{ti-1}(p) + C_{ti-1}(p) - d_{ti-1}(p) = G_{ti-1}^{S;def}(p) \end{cases}$$

$$d_{tu}(p) - D_t^{max}(p) \leq 0$$

où $\overline{T}$ représente les plages d'alerte blanches, c'est à dire les instants où les consignes sont libres.

On va maintenant décrire le procédé de détermination du potentiel d'effacement agrégé illustré à titre d'exemple non limitatif sur la figure 3 et mis en oeuvre à l'aide du module référencé 410 sur la figure 1.

Ce procédé comprend les étapes suivantes :

- Etape 610 : lecture par la centrale de pilotage 400 des plages d'alerte émises par l'opérateur externe 500,
- Etape 620 : étape de test suivie en cas d'échec d'une étape 660 qui force le potentiel agrégé à 0,
- Etape 630 : lecture par la centrale de pilotage 400 du potentiel de modulation d'une source 210 ou d'une unité 310,
- Etape 631 : étape de test suivie en cas d'échec d'une étape 650 qui force le potentiel de la source 210 ou de l'unité 310 considérée à 0,
- Réitération des étapes 630 et 631 pour l'ensemble des sources 210 et unités 310, telle qu'illustré par les étapes référencées 640 et 641,
- Etape 632 : lecture par la centrale de pilotage 400 du contrat d'une source 210 ou d'une unité 310 et transformation de ce contrat en équations linéaires,
- Etape 633 : étape de test suivie en cas d'échec de l'étape précitée 650,
- Réitération des étapes 632 et 633 pour l'ensemble des sources 210 et unités 310, telle qu'illustré par les étapes référencées 642 et 643,
- Etape intermédiaire 651 faisant suite aux étapes 633, 643 et 650,
- Etape 652 au cours de laquelle la centrale de pilotage 400 résout le problème d'optimisation du potentiel de modulation aggrégé,
- Etape 653 : étape de test suivie en cas d'échec, c'est-à-dire lorsque la centrale de pilotage 400 ne trouve pas de solution, de l'étape précitée 660, puis

• Consécutivement aux étapes 653 et 660, étape 654 d'écriture du potentiel agrégé avant envoi à l'opérateur externe lors de l'étape référencée 602 sur la figure 3.

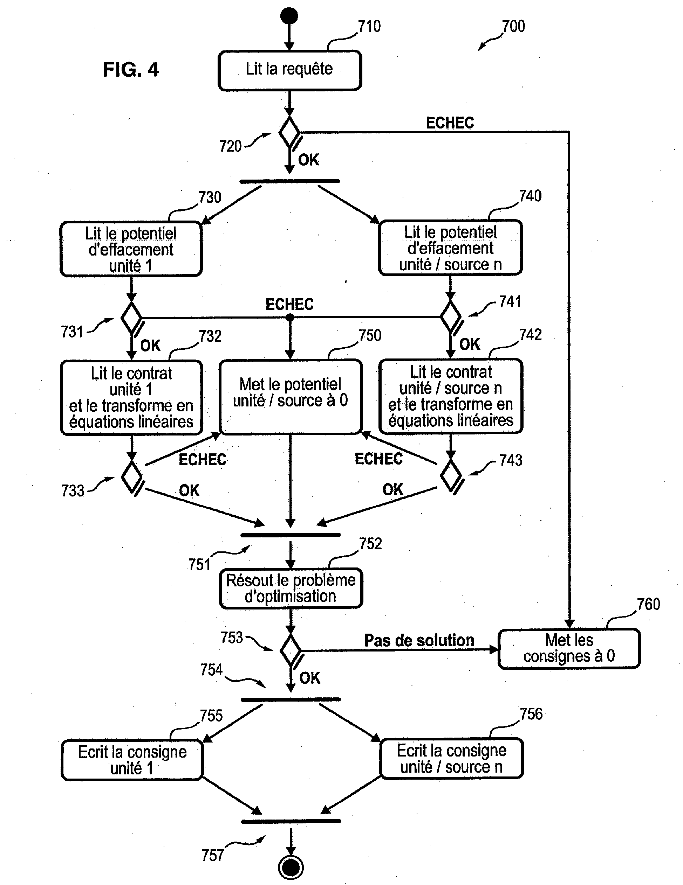

Le procédé de détermination de la répartition des consignes de modulation, illustré à titre d'exemple non limitatif sur la figure 4 et mis en oeuvre par le module référencé 420 sur la figure 1, comprend les étapes suivantes :

• Etape 710 : lecture par la centrale de pilotage 400 des requêtes émises par l'opérateur externe 500,
• Etape 720 : étape de test suivie en cas d'échec d'une étape 760 qui force la consignie à 0,
• Etape 730 : lecture par la centrale de pilotage 400 du potentiel de modulation d'une source 210 ou d'une unité 310,
• Etape 731 : étape de test suivie en cas d'échec d'une étape 750 qui force la consigne de la source 210 ou de l'unité 310 considérée à 0,
• Réitération des étapes 730 et 731 pour l'ensemble des sources 210 et unités 310, telle qu'illustré par les étapes référencées 740 et 741,
• Etape 732 : lecture par la centrale de pilotage 400 du contrat d'une source 210 ou d'une unité 310 et transformation de ce contrat en équations linéaires,
• Etape 733 : étape de test suivie en cas d'échec de l'étape précitée 750,
• Réitération des étapes 732 et 733 pour l'ensemble des sources 210 et unités 310, telle qu'illustré par les étapes référencées 742 et 743,
• Etape intermédiaire 751 faisant suite aux étapes 733, 743 et 750,
• Etape 752 au cours de laquelle la centrale de pilotage 400 résout le problème d'optimisation des modulations individuelles,
• Etape 753 : étape de test suivie en cas d'échec, c'est-à-dire lorsque la centrale de pilotage 400 ne trouve pas de solution, de l'étape précitée 760,
• Etape intermédiaire 754, suivie
• De l'étape 755 d'écriture de la consigne pour une première unité 310 puis d'une réitération de cette étape, sous forme de l'étape 756 pour chacune des unités 310 et sources 210,
• Etape finale 757 de collecte de l'ensemble des consignes, avant envoi aux unités de consommation pilotables 310 et sources de production pilotables 210, lors des étapes référencées 216 et 316 sur la figure 4.

L'homme de l'art comprendra à la lecture de la description détaillée qui précède que la présente invention conduit à des performances bien supérieures à celles des moyens jusqu'ici proposés pour piloter un réseau de distribution électrique.

En particulier, la généricité de la modélisation non seulement des unités de consommation 310, mais également des sources de production 210, incluse dans le processus mis en oeuvre par la centrale de pilotage 400, permet de piloter de manière optimale des unités de consommation 310 et des sources de production 210 de nature complètement différente que ce soit de la production, du délestage, du stockage ou de la substitution de la consommation électrique par une autre source d'énergie. La liste suivante illustre cette hétérogénéité de moyens susceptibles d'être raccordés au réseau de distribution 100 et d'être pilotés dans le cadre de la présente invention, sans être exhaustive:

• Un éclairage public.
• Une pompe à chaleur couplée à un ballon d'eau chaude.
• Un délesteur électrique.
• Une batterie éventuellement couplée à des panneaux photovoltaïque ou de la micro-éolienne.
• Une centrale thermodynamique.
• Une climatisation avec système de stockage du froid.
• Une petite centrale hydraulique avec réservoir (pico-hydraulique)

Un système de chauffage bi-énergie bois-électricité

Par ailleurs le calcul du potentiel d'effacement agrégé des unités de consommation 310 et des sources de production 210, par la centrale de pilotage 400 conforme à la présente invention, constitue une fracture vis-à-vis de l'état de la technique. Vue d'un opérateur externe 500 la centrale de pilotage 400 est assimilable à une centrale virtuelle capable (selon sa capacité, c'est à dire le nombre de ses unités 310 ou sources 210) de fournir une capacité de modulation, en particulier d'effacement, et de participer à l'exploitation du réseau électrique 100 au même titre qu'une centrale de production conventionnelle. En effet la centrale de pilotage 400 conforme à la présente invention est compatible, pour un nombre suffisant d'unités 310 et de sources 210, avec le marché spot de l'électricité et avec le mécanisme d'ajustement infra-journalier.

De plus l'optimisation économique de la répartition des requêtes d'effacement formulées par un opérateur externe 500 en consignes envoyées aux unités 310 et aux sources 210, garantit de fournir exactement l'effacement demandé par l'opérateur externe tout en minimisant le coût de réalisation.

L'on soulignera que dans les processus actuellement mis en oeuvre selon l'état de la technique, la consommation est considérée comme une variable aléatoire perturbatrice et non comme un élément pilotable pour équilibrer le système. De même, selon l'état de la technique, la production décentralisée n'est pas pilotée pour équilibrer le système : elle est considérée comme fatale.

L'invention propose une avancée majeure dans le domaine du pilotage de la charge électrique : en utilisant une approche par modélisation plutôt que par apprentissage statistique, elle permet de rendre la consommation et la production décentralisée pilotable au niveau d'un réseau de distribution basse tension, c'est-à-dire au niveau d'un territoire local. En rassemblant un nombre suffisants de consommateurs et de petits producteurs (typiquement entre 1000 et 10000), la présente invention permet de piloter une puissance non négligeable (de 1 à 100 MW) et ainsi contribuer à l'équilibre du système électrique.

La prise en compte du potentiel de modulation modélisé des sources de production pilotables, offert par la présente invention, permet par ailleurs de minimiser les consignes d'effacement et de rendre les périodes d'effacement imposées inférieures à celles résultant des moyens connus de l'état de la technique.

Les informations échangées entre le ou les opérateur(s) externe(s) 500, les sources de production 210, les unités de consommation 310 et la centrale de pilotage 400 peuvent être transmises entre ces différents éléments par tous moyens appropriés, tels que par exemple par courants porteurs (CPL) sur le réseau 100, ou encore par des canaux séparés dédiés, par exemple filaires ou à base de fibres optiques, voire par tout moyen de communication sans fil approprié. En d'autres termes la présente invention n'est aucunement limitée quant au support physique de transmission (CPL, radio, ADSL, ...), ou au canal ou à l'architecture de communication entre les unités de consommation ou les sources de production, la centrale et les opérateurs. Ainsi à titre d'exemple les informations peuvent transiter par le compteur des installations ou par des boîtiers, notamment des boîtiers internet, indépendants, sans passer par le compteur.

**Revendications**

1. Ensemble de pilotage d'un système de production/consommation électrique comprenant des sources de production électrique (200) et des unités de consommation (300) raccordées par l'intermédiaire d'un réseau de distribution (100), **caractérisé par le fait qu'**il comprend :

   . une centrale de pilotage (400) adaptée pour transmettre à des unités de consommation pilotables (310) et à des sources de production électrique pilotables (210), des consignes de modulation correspondant à des consignes d'effacement, respectivement de production, basées sur des informations d'alerte reçues d'un opérateur externe (500), sur des informations représentatives du potentiel d'effacement respectif d'unités de consommation pilotables (310) et sur des informations représentatives du potentiel de production ou de réduction de production, voire d'effacement respectif de sources de production (210),
   . au niveau de chaque unité de consommation pilotable (310), un module (312) adapté pour transmettre à la centrale de pilotage (400), des données mises à jour en temps réel représentatives du potentiel d'effacement respectif de l'unité associée (310), et
   . au niveau de certaines au moins des sources de production pilotables (210), un module (212) adapté pour transmettre à la centrale de pilotage (400), des données mises à jour en temps réel, représentatives du potentiel de production ou de réduction de production, voire d'effacement respectif de la source associée (210).

2. Ensemble selon la revendication 1, **caractérisé en ce que** la centrale de pilotage (400) est adaptée pour fournir des consignes de modulation aux sources de production pilotables (210) et aux unités de consommation pilotables (310), à différents horizons de temps.

3. Ensemble selon l'une des revendications 1 ou 2, **caractérisé en ce que** la centrale de pilotage (400) est adaptée pour fournir des consignes de modulation aux sources de production pilotables (210) et aux unités de consommation pilotables (310), selon au moins un premier horizon de temps à l'échelle de la journée selon un premier pas en minutes, pour les demandes de modulation envoyées la veille de leur application, et un deuxième horizon de temps à l'échelle de quelques heures selon un second pas en minutes, de préférence inférieur au premier pas, pour les demandes de modulation envoyées le jour de leur application.

4. Ensemble selon l'une des revendications 1 à 3, **caractérisé en ce que** la centrale de pilotage (400) est adaptée pour fournir des consignes de modulation aux sources de production pilotables (210) et aux unités de consommation pilotables (310), selon deux horizons de temps, un horizon à 24h au pas de 30mn pour les demandes de modulation j-1 et un horizon à 4h au pas de 10mn pour les demandes de modulation j.

5. Ensemble selon l'une des revendications 1 à 4, **caractérisé en ce que** une source de production pilotable (210) ou une unité de consommation pilotable (310) qui reçoit deux consignes qui se chevauchent, applique une consigne incrémentale résultant de la somme des deux ou bien une consigne résultant d'un arbitrage pré-défini selon la nature de l'opérateur externe (500) envoyant la plage d'alerte.

6. Ensemble selon l'une des revendications 1 à 5, **caractérisé en ce que** chaque module (212, 312) est adapté pour fournir des informations sur son potentiel de modulation, soit un potentiel d'effacement, respectivement de production, à un horizon de temps supérieur à celui de la centrale de pilotage (400) pour les consignes.

7. Ensemble selon l'une des revendications 1 à 6, **caractérisé en ce que** chaque module (212, 312) fournit des informations sur son potentiel de modulation en temps réel, pour les 40 prochaines heures au pas 10 minutes.

8. Ensemble selon l'une des revendications 1 à 7, **caractérisé en ce que** le pas temporel des informations fournies par les modules (212, 312) est égal au pas minimal des consignes générées par la centrale de pilotage (400).

9. Ensemble selon l'une des revendications 1 à 8, **caractérisé en ce que** le potentiel de modulation généré par les modules (212, 312) est décrit par i) des données mises à jour en temps réel et ii) des contraintes de fonctionnement consignées dans un contrat d'effacement ou de production.

10. Ensemble selon la revendication 9, **caractérisé en ce que** les données mises à jour en temps réel comprennent des données choisies parmi la puissance maximale modulable, effaçable ou pouvant être produite, sur une période prédéterminée, le coût marginal de modulation et l'état courant.

11. Ensemble selon l'une des revendications 9 ou 10, **caractérisé en ce que** les données mises à jour en temps réel comprennent des informations liées à l'utilisation d'un stock, par exemple un profil d'utilisation par défaut du stock, un profil de variation maximale du stock, un niveau de stock initial et un niveau de stock final minimal.

12. Ensemble selon l'une des revendications 9 à 11, **caractérisé en ce que** les contraintes de fonctionnement comprennent des contraintes techniques des sources de production pilotables (210) et des unités de consommation pilotables (310) et des contraintes de confort de l'utilisateur de chaque unités (210) ainsi que des clauses financières décrites dans un contrat d'effacement, voire un contrat de production.

13. Ensemble selon l'une des revendications 1 à 12, **caractérisé en ce que** la centrale de pilotage (400) reçoit deux types de plage d'alerte de l'opérateur externe (500) correspondant à des probabilités différentes de sollicitation d'effacement ou de production.

14. Ensemble selon l'une des revendications 1 à 13, **caractérisé en ce que** le pas des plages d'alerte est égal au pas de l'horizon le plus long des consignes.

15. Ensemble selon l'une des revendications 1 à 14, **caractérisé en ce que** les alertes sont envoyées à la centrale de pilotage (400) par l'opérateur externe (500), la veille de leur application.

16. Ensemble selon l'une des revendications 1 à 15, **caractérisé en ce que** le nombre, les horizons de temps et les pas de requêtes de modulation générées par l'opérateur externe (500) sont identiques à ceux des consignes de modulation issues de la centrale de pilotage (400).

17. Procédé de pilotage d'un système de production/consommation électrique comprenant des sources de production électrique (200) et des unités de consommation (300) raccordées par l'intermédiaire d'un réseau de distribution électrique (100), **caractérisé en ce qu'**il comprend les étapes consistant à :

. générer des informations représentatives d'un potentiel de modulation au niveau des unités de consommation pilotables (310) et des sources de production pilotables (210) et générer des plages d'alertes au niveau d'un opérateur externe (500),
. procéder à l'évaluation d'un potentiel de modulation pour l'ensemble des sources de production pilotables (210) et unités de consommation pilotables (310) au niveau d'une centrale de pilotage (400), sur la base des informations précitées,

. adresser le résultat de cette évaluation à l'opérateur externe (500),

. générer des requêtes générales de modulation au niveau de l'opérateur externe (500) et adresser ces requêtes à la centrale de pilotage (400),

. procéder à l'évaluation de plans de modulation individuels au niveau de la centrale de pilotage (400) sur la base des requêtes issues de l'opérateur externe et des informations reçues des sources de production pilotables (210) et unités de consommation pilotables (310) et

. appliquer les consignes de modulation résultantes reçues de la centrale de pilotage (400) aux sources de production pilotables (210) et unités de consommation pilotables (310).

**18.** Procédé selon la revendication 17, **caractérisé en ce que** la centrale de pilotage (400) réalise dans un premier temps une maximisation des potentiels individuels de modulation sur des périodes d'alertes prioritaires, puis sur des périodes d'alertes de priorité secondaire, en tenant compte des contraintes décrites dans des contrats d'effacement ou de production.

**19.** Procédé selon l'une des revendications 17 ou 18, **caractérisé en ce que** la centrale de pilotage (400) calcule également le coût marginal de modulation agrégé des sources de production pilotables (210) et unités de consommation pilotables (310).

**20.** Procédé selon l'une des revendications 17 à 19, **caractérisé en ce que** la centrale de pilotage (400) tient compte des stocks des unités de consommation (310) et des sources de production (210).

**Patentansprüche**

**1.** Anordnung zur Steuerung eines Stromerzeugungs/Verbrauchssystems, das Stromerzeugungsquellen (200) und Verbrauchseinheiten (300) umfasst, die über ein Verteilungsnetz (100) verbunden sind, **dadurch gekennzeichnet, dass** es Folgendes umfasst:

. eine Steuerungszentrale (400), die angepasst ist, um Modulationssollwerte, die Sollwerten zum Lastmanagement beziehungsweise zur Erzeugung entsprechen, die auf von einem externen Betreiber (500) empfangenen Alarminformationen, auf Informationen, die für das jeweilige Lastmanagementpotenzial der steuerbaren Verbrauchseinheiten (310) charakteristisch sind, und auf Informationen basieren, die für das Erzeugungs- oder Erzeugungsverminderungsbeziehungsweise jeweilige Lastmanagementpotenzial von Erzeugungsquellen (210) charakteristisch sind, an steuerbare Verbrauchseinheiten (310) und an steuerbare Stromerzeugungsquellen (210) zu senden,

. auf der Ebene jeder steuerbaren Verbrauchseinheit (310) ein Modul (312), das angepasst ist, um in Echtzeit aktualisierte Daten, die für das jeweilige Lastmanagementpotenzial der zugehörigen Einheit (310) charakteristisch sind, an die Steuerungszentrale (400) zu senden, und

. auf der Ebene von zumindest bestimmten der steuerbaren Erzeugungsquellen (210), ein Modul (212), das angepasst ist, um der Steuerungszentrale (400) in Echtzeit aktualisierte Daten zu senden, die für das jeweilige Erzeugungs- oder Erzeugungsverminderungsbeziehungsweise Lastmanagementpotenzial der zugehörigen Quelle (210) charakteristisch sind.

**2.** Anordnung nach Anspruch 1, **dadurch gekennzeichnet, dass** die Steuerungszentrale (400) angepasst ist, um Modulationssollwerte an die steuerbaren Erzeugungsquellen (210) und an die steuerbaren Verbrauchseinheiten (310) mit verschiedenen zeitlichen Horizonten zu liefern.

**3.** Anordnung nach einem der Ansprüche 1 oder 2, **dadurch gekennzeichnet, dass** die Steuerungszentrale (400) angepasst ist, um Modulationssollwerte an die steuerbaren Erzeugungsquellen (210) und an die steuerbaren Verbrauchseinheiten (310) gemäß mindestens einem ersten zeitlichen Horizont, der dem Tag entspricht, gemäß einer ersten Schrittweite von Minuten, für die am Vortag ihrer Anwendung gesendeten Modulationsanforderungen, und einem zweiten zeitlichen Horizont, der einigen Stunden entspricht, gemäß einer zweiten Schrittweite von Minuten, die vorzugsweise kleiner ist als die erste Schrittweite, für die am Tag ihrer Anwendung gesendeten Modulationsanforderungen zu liefern.

**4.** Anordnung nach einem der Ansprüche 1 bis 3, **dadurch gekennzeichnet, dass** die Steuerungszentrale (400) angepasst ist, um Modulationssollwerte an die steuerbaren Erzeugungsquellen (210) und an die steuerbaren Verbrauchseinheiten (310) gemäß zwei zeitlichen Horizonten, einem Horizont von 24 Stunden mit einer Schrittweite von 30 Minuten für die Modulationsanforderungen T-1 und einem Horizont von 4 Stunden mit einer Schrittweite von 10 Minuten für die Modulationsanforderungen T zu liefern.

5. Anordnung nach einem der Ansprüche 1 bis 4, **dadurch gekennzeichnet, dass** eine steuerbare Erzeugungsquelle (210) oder eine steuerbare Verbrauchseinheit (310), die zwei Sollwerte empfängt, die sich überlappen, einen inkrementellen Sollwert, der aus der Summe der zwei resultiert, oder einen Sollwert anwendet, der aus einer vordefinierten Arbitration gemäß der Art des externen Betreibers (500), der den Alarmbereich sendet, resultiert.

6. Anordnung nach einem der Ansprüche 1 bis 5, **dadurch gekennzeichnet, dass** jedes Modul (212, 312) angepasst ist, um Informationen über sein Modulationspotenzial, das heißt ein Lastmanagementbeziehungsweise Erzeugungspotenzial, in einem zeitlichen Horizont zu liefern, der größer ist als derjenige der Steuerzentrale (400) für die Sollwerte.

7. Anordnung nach einem der Ansprüche 1 bis 6, **dadurch gekennzeichnet, dass** jedes Modul (212, 312) Informationen über sein Modulationspotenzial in Echtzeit für die nächsten 40 Stunden mit einer Schrittweite von 10 Minuten liefert.

8. Anordnung nach einem der Ansprüche 1 bis 7, **dadurch gekennzeichnet, dass** die Zeitschrittweite der durch die Module (212, 312) gelieferten Informationen gleich der Mindestschrittweite der durch die Steuerungszentrale (400) erzeugten Sollwerte ist.

9. Anordnung nach einem der Ansprüche 1 bis 8, **dadurch gekennzeichnet, dass** das durch die Module (212, 312) erzeugte Modulationspotenzial durch i) Daten, die in Echtzeit aktualisiert werden, und ii) in einem Lastmanagement- oder Erzeugungsvertrag festgelegten Betriebseinschränkungen beschrieben wird.

10. Anordnung nach Anspruch 9, **dadurch gekennzeichnet, dass** die in Echtzeit aktualisierten Daten Daten umfassen, die unter der maximalen modulierbaren Leistung, die über einen vorbestimmten Zeitraum dem Lastmanagement zugeführt oder erzeugt werden kann, den Modulationsgrenzkosten und dem gegenwärtigen Zustand ausgewählt werden.

11. Anordnung nach einem der Ansprüche 9 oder 10, **dadurch gekennzeichnet, dass** die in Echtzeit aktualisierten Daten Informationen umfassen, die mit der Nutzung eines Vorrates, zum Beispiel einem Standard-Verwendungsprofil des Vorrates, einem maximalen Veränderungsprofil des Vorrates, einem Anfangsvorratsstand und einem Mindestendvorratsstand, verbunden sind.

12. Anordnung nach einem der Ansprüche 9 bis 11, **dadurch gekennzeichnet, dass** die Betriebseinschränkungen technische Einschränkungen der steuerbaren Erzeugungsquellen (210) und der steuerbaren Verbrauchseinheiten (310) und Einschränkungen des Komforts des Benutzers von jeder Einheit (210) sowie finanzielle Klauseln umfassen, die in einem Lastmanagementvertrag beziehungsweise einem Erzeugungsvertrag beschrieben sind.

13. Anordnung nach einem der Ansprüche 1 bis 12, **dadurch gekennzeichnet, dass** die Steuerungszentrale (400) zwei Typen von Alarmbereichen von dem externen Betreiber (500) empfängt, die unterschiedlichen Wahrscheinlichkeiten einer Lastmanagement- oder Erzeugungsbeanspruchung entsprechen.

14. Anordnung nach einem der Ansprüche 1 bis 13, **dadurch gekennzeichnet, dass** die Schrittweite der Alarmbereiche gleich der Schrittweite des längsten Horizontes der Sollwerte ist.

15. Anordnung nach einem der Ansprüche 1 bis 14, **dadurch gekennzeichnet, dass** die Alarme durch den externen Betreiber (500) am Vortag ihrer Anwendung an die Steuerungszentrale (400) gesendet werden.

16. Anordnung nach einem der Ansprüche 1 bis 15, **dadurch gekennzeichnet, dass** die Anzahl, die zeitlichen Horizonte und die Schrittweite der Modulationsanforderungen, die durch den externen Betreiber (500) erzeugt werden, identisch mit denjenigen der Modulationssollwerte sind, die von der Steuerungszentrale (400) stammen.

17. Verfahren zur Steuerung eines Stromerzeugungs/Verbrauchssystems, das Stromerzeugungsquellen (200) und Verbrauchseinheiten (300) umfasst, die über ein Stromversorgungsnetz (100) verbunden sind, **dadurch gekennzeichnet, dass** es die Schritte umfasst, die aus Folgendem bestehen:

. Erzeugen von Informationen, die für ein Modulationspotenzial im Bereich der steuerbaren Verbrauchseinheiten (310) und der steuerbaren Erzeugungsquellen (210) charakteristisch sind, und Erzeugen von Alarmbereichen im Bereich eines externen Betreibers (500),

. Vornehmen der Bewertung eines Modulationspotenzials für sämtliche steuerbaren Erzeugungsquellen (210) und steuerbaren Verbrauchseinheiten (310) im Bereich einer Steuerungszentrale (400) auf der Grundlage der vorhergehend genannten Informationen,

. Adressieren des Ergebnisses dieser Bewertung an den externen Betreiber (500),

. Erzeugen der allgemeinen Modulationsanforderungen im Bereich des externen Betreibers (500) und Adressieren dieser Anforderungen an die Steuerungszentrale (400),

. Durchführen der Bewertung individueller Modulationspläne im Bereich der Steuerungszentrale (400) auf der Grundlage der Anforderungen, die von dem externen Betreiber stammen, und den von den steuerbaren Erzeugungsquellen (210) und steuerbaren Verbrauchseinheiten (310) empfangenen Informationen und

. Anwenden der resultierenden Modulationssollwerte, die von der Steuerungszentrale (400) empfangen werden, auf die steuerbaren Erzeugungsquellen (210) und steuerbaren Verbrauchseinheiten (310).

**18.** Verfahren nach Anspruch 17, **dadurch gekennzeichnet, dass** die Steuerungszentrale (400) zunächst eine Maximierung der einzelnen Modulationspotenziale auf prioritären Alarmzeiträumen, dann auf Alarmzeiträumen mit sekundärer Priorität unter Berücksichtigung der in den Lastmanagement- oder Erzeugungsverträgen beschriebenen Einschränkungen ausführt.

**19.** Verfahren nach einem der Ansprüche 17 oder 18, **dadurch gekennzeichnet, dass** die Steuerungszentrale (400) auch die zusammengefassten Modulationsgrenzkosten der steuerbaren Erzeugungsquellen (210) und steuerbaren Verbrauchseinheiten (310) berechnet.

**20.** Verfahren nach einem der Ansprüche 17 bis 19, **dadurch gekennzeichnet, dass** die Steuerungszentrale (400) die Vorräte der Verbrauchseinheiten (310) und der Erzeugungsquellen (210) berücksichtigt.

**Claims**

**1.** A control assembly for controlling an electricity production/consumption system comprising electricity production sources (200) and consumption sources (300) connected via a distribution network (100), **characterized by** the fact that it comprises:

. a control centre (400) adapted to transmit modulation orders to controllable consumption units (310) and to controllable electricity production sources (210), these orders corresponding to withdrawal or production orders respectively, based on alert data received from an external operator (500), on data representing the respective withdrawal potential of controllable consumption units (310) and on data representing the respective production or reduced production even withdrawal potential of production sources (210),

. at each controllable consumption unit (310), a module (312) adapted to transmit data to the control centre (400) updated in real time representing the respective withdrawal potential of the associated unit (310), and

. at least at some controllable production sources (210), a module (212) adapted to transmit data to the control centre (400) updated in real time representing the respective production or reduced production even withdrawal of the associated source (210).

**2.** The assembly according to claim 1, **characterized in that** the control centre (400) is adapted to give modulation orders to the controllable production sources (210) and to the controllable consumption units (310) at different time horizons.

**3.** The assembly according to one of claims 1 or 2, **characterized in that** the control centre (400) is adapted to give modulation orders to the controllable production sources (210) and to the controllable consumption units (310) at least as per a first time horizon on a day scale at a first pitch in minutes, for modulation orders sent the day before the application thereof, and a second time horizon on the scale of a few hours at a second pitch in minutes, preferably smaller than the first pitch, for modulation orders sent on the day of the application thereof.

**4.** The assembly according to one of claims 1 to 3, **characterized in that** the control centre (400) is adapted to give modulation orders to the controllable production sources (210) and to the controllable consumption units (310) as per two time horizons, one 24h horizon at a pitch of 30min for D-1 modulation requests, and a 4h horizon at a pith of 10min for D modulation requests.

5. The assembly according to one of claims 1 to 4 **characterized in that** a controllable production source (210) or a controllable consumption unit (310) which receives two overlapping orders applies an incremental order resulting from the sum of both or else an order resulting from a predefined arbitration in accordance with the type of external operator (500) sending the alert period.

6. The assembly according to one of claims 1 to 5, **characterized in that** each module (212, 312) is adapted to provide data on its modulation potential, i.e withdrawal or production potential respectively at a time horizon longer than that of the control station (400) for orders given.

7. The assembly according to one of claims 1 to 6, **characterized in that** each module (212, 312) provides data on its modulation potential in real time, for the next 40 hours at a pitch of 10 minutes.

8. The assembly according to one of claims 1 to 7, **characterized in that** the time pitch for data provided by the modules (212, 312) is equal to the minimum pitch of the orders generated by the control station (400).

9. The assembly according to one of claims 1 to 8, **characterized in that** the modulation potential generated by the modules (212, 312) is described i) by data updated in real time and ii) by operating constraints entered into a withdrawal or production contract.

10. The assembly according to claim 9, **characterized in that** the data updated in real time comprise data chosen from among maximum adjustable power, which can be withdrawn or produced over a predetermined period, the marginal cost of modulation and the current state.

11. The assembly according to one of claims 9 or 10, **characterized in that** the data updated in real time comprise data related to use of a stock, for example a profile of default use of the stock, a profile of maximum variation in the stock, an initial stock level and a final minimum stock level.

12. The assembly according to one of claims 9 to 11, **characterized in that** the operating constraints comprise technical constraints of the controllable production sources (210) and controllable consumption units (310) and comfort restraints of the user of each unit (210) as well as financial clauses entered into a withdrawal contract, even a production contract.

13. The assembly according to one of claims 1 to 12, **characterized in that** the control centre (400) receives two types of alert periods from the external operator (500) corresponding to different probabilities of requests for withdrawal or production.

14. The assembly according to one of claims 1 to 13, **characterized in that** the pitch of the alert periods is equal to the pitch of the longest horizon of the orders.

15. The assembly according to one of claims 1 to 14, **characterized in that** the alerts are sent to the control station (400) by the external operator (500) the day before the application thereof.

16. The assembly according to one of claims 1 to 15, **characterized in that** the number, the time horizons and pitches of the modulation requests generated by the external operator (500) are identical to those of the modulation orders given by the control centre (400).

17. A method for controlling an electricity production/consumption system comprising electricity production sources (200) and consumption units (300) connected via an electricity distribution network (100), **characterized in that** it comprises the steps of:

   . generating data representing a modulation potential at the controllable consumption units (310) and controllable production sources (210) and generating alert periods at an external operator (500),
   . evaluating a modulation potential for all the controllable production sources (210) and controllable consumption units (310) at a control centre (400) on the basis of the aforementioned data,
   . addressing the result of this evaluation to the external operator (500),
   . generating general modulation requests at the external operator (500) and addressing these requests to the control centre (400),

. evaluating individual modulation plans at the control centre (400) on the basis of requests given by the external operator and data received from the controllable production sources (210) and controllable consumption units (310), and

. applying the resulting modulation orders received from the control station (400) to the controllable production sources (210) and controllable consumption units (310).

18. The method according to claim 17, **characterized in that** the control centre (400) initially maximises individual modulation potentials over priority alert periods, then over alert periods of secondary priority, taking into account the constraints entered into withdrawal or production contracts.

19. The method according to one of claims 17 or 18, **characterized in that** the control centre (400) also calculates the aggregate marginal modulation cost of the controllable production sources (210) and controllable consumption units (310).

20. The method according to one of claims 17 to 19, **characterized in that** the control centre (400) takes into account the stocks of the consumption units (310) and production sources (210).

## FIG. 1

## FIG. 2

314

| UNITE DE CONSOMMATION |
| POTENTIEL |

214

| SOURCE DE PRODUCTION |
| POTENTIEL |

514

| OPERATEUR EXTERNE |
| PLAGE ALERTE |

| CENTRALE DE PILOTAGE |
| EVALUATION DU POTENTIEL MODULATION |

600

| ENVOI A L'OPERATEUR EXTERNE |

602

| GENERATION DES REQUETES |

604

| CENTRALE DE PILOTAGE |
| DEFINITION PLAN DE MODULATION |

700

| UNITE DE CONSOMMATION |
| APPLICATION DES CONSIGNES |

316

| SOURCE DE PRODUCTION |
| APPLICATION DES CONSIGNES |

216

**FIG. 3**

**FIG. 4**

710
700
Lit la requête

720 OK
ECHEC

730
Lit le potentiel
d'effacement
unité 1

740
Lit le potentiel
d'effacement
unité / source n

731 OK
ECHEC
741 OK

732
Lit le contrat
unité 1
et le transforme en
équations linéaires

750
Met le potentiel
unité / source à 0

742
Lit le contrat
unité / source n
et le transforme en
équations linéaires

733 OK
ECHEC

ECHEC
OK 743

751
752
Résout le problème
d'optimisation

753 Pas de solution
760
Met les
consignes à 0

754 OK

755
Ecrit la consigne
unité 1

756
Ecrit la consigne
unité / source n

757

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2904486
- FR 2937473
- US 20100094479 A